# EUROPÄISCHE PATENTSCHRIFT

(11) **EP 1 170 518 B1**
(45) Veröffentlichungstag und Bekanntmachung des Hinweises auf die Patenterteilung: **25.08.2004**
(21) Anmeldenummer: 01115596.7
(22) Anmeldetag: 28.06.2001
(51) Int. Cl.: F16C 11/10, F16C 19/50

(54) **Verriegelbare Lagereinheit**
Lockable bearing unit
Unité de palier verrouillable

(30) Priorität: 07.07.2000 DE 10032590
(43) Veröffentlichungstag der Anmeldung: 09.01.2002
(73) Patentinhaber: SKF GmbH, 97421 Schweinfurt (DE)
(72) Erfinder: von Schleinitz, Thilo, 97422 Schweinfurt (DE)
(74) Vertreter: Hetterich, Winfried

(56) Entgegenhaltungen:
- WO-A-97/37144
- WO-A-99/20218
- DD-A- 240 089
- FR-A- 2 392 780
- US-A- 5 413 415

## Beschreibung

Die Erfindung betrifft eine Lagereinheit gemäß dem Oberbegriff des Anspruchs 1 und ein Verfahren zum Verriegeln einer Lagereinheit gemäß dem Oberbegriff des Anspruchs 11.

Eine derartige Lagereinheit ist bereits aus der deutschen Auslegeschrift DE-A 1 904 954 bekannt. Dort ist eine drehzapfenlose Drehverbindung offenbart, die eine als Scheibenbremse ausgebildete Bremsvorrichtung aufweist.

Der Erfindung liegt die Aufgabe zugrunde, für drehbar zueinander gelagerte Maschinenteile eine Einrichtung anzugeben, mit der die Drehbewegung wahlweise unterbunden und freigegeben werden kann bzw. ein entsprechendes Verfahren zur Unterbindung und Freigabe der Drehbewegung anzugeben.

Diese Aufgabe wird durch die Merkmalskombinationen der Ansprüche 1 bzw. 11 gelöst.

Bei der erfindungsgemäßen Lagereinheit kann die relative Drehbewegung zwischen dem ersten und dem zweiten Lagerring dadurch unterbunden werden, dass eine in die Lagereinheit integrierte Verriegelungseinrichtung den ersten und den zweiten Lagerring formschlüssig miteinander verbindet. Die Verriegelungseinrichtung wird fernbedient angesteuert.

Eine formschlüssige Verbindung hat gegenüber einer Reibungsbremse den Vorteil, dass auch bei sehr hohen Drehmomenten eine exakte Verdrehsicherung sicher gewährleistet wird. Ein weiterer Vorteil besteht darin, dass zur Herstellung und zur Aufhebung der Verdrehsicherung jeweils eine nur sehr geringe Leistung erforderlich ist. Dies hat zum einen zur Folge, dass keine Probleme bei der Abfuhr der auftretenden Verlustleistung zu erwarten sind und zum anderen, dass eine sehr kompakte Bauform möglich ist und die Erfindung somit auch bei Lagern mit kleinen geometrischen Abmessungen eingesetzt werden kann. Des weiteren kann auf Bremsbeläge verzichtet werden, die dem Verschleiß unterliegen und somit einen zusätzlichen Wartungsaufwand darstellen.

Die Integration der Verriegelungseinrichtung in die Lagereinheit hat den Vorteil, dass die Lagereinheit ausschließlich mit den in ihr enthaltenen Komponenten verriegelbar ist und - außer des erforderlichen Steueranschlusses - für ihre Funktion keinerlei externe Maschinenteile benötigt werden, d. h. die erfindungsgemäße Lagereinheit kann wie ein konventionelles Lager montiert werden und benötigt keine spezielle Einbauumgebung. Es ist lediglich zu beachten, dass die Lagerringe verdrehsicher montiert werden.

Des weiteren weist die erfindungsgemäße Lagereinheit den Vorteil auf, dass die Formschlussverbindung zwischen dem ersten und dem zweiten Lagerring auf vielfältige Weise hergestellt werden kann und somit den Gegebenheiten des speziellen Anwendungsfalls in optimaler Weise Rechnung getragen werden kann. So ist beispielsweise eine exakte Verriegelung zwischen Innen- und Außenring durch ineinandergreifende Verzahnungen ebenso möglich wie eine kostengünstige und sehr kompakt ausführbare Verriegelung mittels eines Bolzen/Bohrungs-Paares.

Des weiteren kann die erfindungsgemäße Lagereinheit im Hinblick auf alle üblichen Ansteuerungsmethoden wie beispielsweise eine pneumatische, eine hydraulische, eine mechanische, eine elektrische oder eine magnetische Ansteuerung ausgelegt werden und ist somit sehr universell einsetzbar.

Die Erfindung wird nachfolgend anhand der in der Zeichnung dargestellten Ausführungsformen erläutert.

Es zeigen:
- Figuren 1, 2 und 3: Ausführungsformen der erfindungsgemäßen Lagereinheit in Form eines Radialkugellagers mit unterschiedlichen Verriegelungseinrichtungen in Schnittdarstellung und
- Figuren 4 und 5: Ausführungsformen der erfindungsgemäßen Lagereinheit als Radial-Zylinderrollenlager mit jeweils verschiedenartig ausgebildeten elastischen Elementen in Schnittdarstellung.

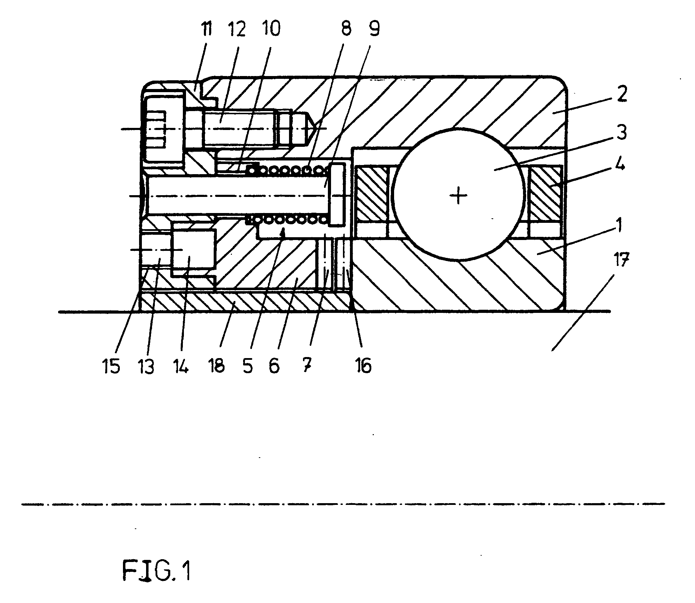

Figur 1 zeigt die Ausbildung der erfindungsgemäßen Lagereinheit als Radialkugellager in Schnittdarstellung. Die Lagereinheit weist einen Innenring 1, einen Außenring 2 und zwischen Innenring 1 und Außenring 2 angeordnete und als Kugeln ausgebildete Wälzkörper 3 auf, die mittels eines Käfigs 4 fixiert werden. Weiterhin weist die erfindungsgemäße Lagereinheit eine Verriegelungseinrichtung 5 auf, die aus einem Kolben 6 mit einer stirnseitigen Verzahnung 7 und Schraubenfedern 8 besteht. Die Schraubenfedern 8 sind auf Bolzen 9 aufgefädelt, welche den Kolben 6 in dafür vorgesehenen Führungsbohrungen 10 durchdringen und in einer ringförmigen Grundplatte 11 beispielsweise durch Verstemmen befestigt sind. Die Grundplatte 11 ist mittels Schrauben 12 mit dem Außenring 2 verschraubt und weist einen Druckluftkanal 13 auf, der zu einer umlaufenden Nut 14 des Kolbens 6 führen. Der Druckluftkanal 13 ist mit einem Innengewinde 15 für den Anschluss einer Druckluftleitung versehen. Axial gegenüber der Verzahnung 7 des Kolbens 6 weist der Innenring 1 eine Verzahnung 16 auf. Zur Montage der Lagereinheit auf einer Welle 17 ist eine Distanzhülse 18 vorgesehen.

Die erfindungsgemäße Lagereinheit ist in Figur 1 in entriegeltem Zustand dargestellt, d. h. der Innenring 1 und der Außenring 2 können frei gegeneinander rotieren. Der entriegelte Zustand entspricht bei der dargestellten Ausführungsform dem Ruhezustand der Verriegelungseinrichtung 5, d. h. dem Betriebszustand, den die Verriegelungseinrichtung 5 einnimmt, wenn über den Druckluftkanal 13 keine Druckluft zugeführt wird. In diesem Betriebszustand wird der Kolben 6 durch die Schraubenfedern 8 in Axialrichtung der Lagereinheit gegen die Grundplatte 11 gepresst, so dass die sich axial gegenüberliegenden Verzahnungen 7 des Kolbens 6 und 16 des Innenrings 1 nicht ineinander greifen und damit auch keine formschlüssige Verbindung zwischen dem Innenring 1 und dem Außenring 2 herstellen.

Wird nun der Nut 14 des Kolbens 6 über den Druckluftkanal 13 Druckluft zugeführt, so verschiebt sich der Kolben 6 unter Überwindung der Rückstellkraft der Schraubenfedern 8 in Axialrichtung zum Außenring 1 hin. Bei dieser Verschiebung werden die Schraubenfedern 8 zunehmend gestaucht und die Verzahnungen 7 und 16 nähern sich einander an und greifen schließlich ineinander, so dass eine formschlüssige Verbindung zwischen dem Innenring 1 und dem Kolben 6 hergestellt wird. Der Kolben 6 ist über die Bolzen 9 in der Grundplatte 11 in Umfangsrichtung formschlüssig verankert. Die Grundplatte 11 ist durch die Schrauben 12 mit dem Außenring 2 in Umfangsrichtung formschlüssig verbunden. Somit kommt es durch den formschlüssigen Eingriff der Verzahnungen 7 und 16 letztendlich zu einer formschlüssigen Verbindung zwischen dem Innenring 1 und dem Außenring 2, die eine relative Drehbewegung zwischen dem Innenring 1 und dem Außenring 2 bis auf ein ggf. vorhandenes Spiel vollständig unterbindet. Die Verriegelung der Lagereinheit wird solange aufrecht erhalten, so lange in der Nut 14 ein ausreichend hoher Luftdruck vorhanden ist, um die Rückstellkraft der Schraubenfedern 8 im eingefederten Zustand zu kompensieren oder sogar zu übersteigen. Sinkt der Druck ab, so entspannen sich die Schraubenfedern 8 getrieben von der Rückstellkraft und verschieben den Kolben 6 in Axialrichtung vom Außenring 1 weg. Die axiale Verschiebung des Kolbens 6 wird durch die Grundplatte 11 begrenzt, d. h. die Endposition ist erreicht, wenn der Kolben 6 an der Grundplatte 11 anliegt.

Die Verzahnungen 7 und 16 sind so ausgeführt, dass ein auf die ineinander greifenden Verzahnungen 7 und 16 einwirkendes Drehmoment diese nicht axial auseinander drückt, d. h. der formschlüssige Eingriff bleibt auch im belasteten Zustand erhalten. Dies kann dadurch erreicht werden, dass die sich berührenden Flächen der Verzahnungen 7 und 16 jeweils in Axialrichtung verlaufen.

Wie vorstehend im einzelnen erläutert, kann somit die Lagereinheit durch Zufuhr von Druckluft verriegelt werden und entriegelt selbsttätig im drucklosen Zustand. Die Druckluftzufuhr erfolgt über entsprechende Schläuche oder Leitungen, so dass die Lagereinheit fernbedient zwischen ihrem verriegelten und ihrem entriegeltem Betriebszustand umgeschaltet werden kann. Ohne wesentliche Modifikationen könnte die in Figur 1 dargestellte Ausführungsform statt mit Druckluft mit einer Hydraulikflüssigkeit betrieben werden. Dabei wären gegebenenfalls die Dimensionierung des Zufuhrkanals und die Abdichtung entsprechend anzupassen.

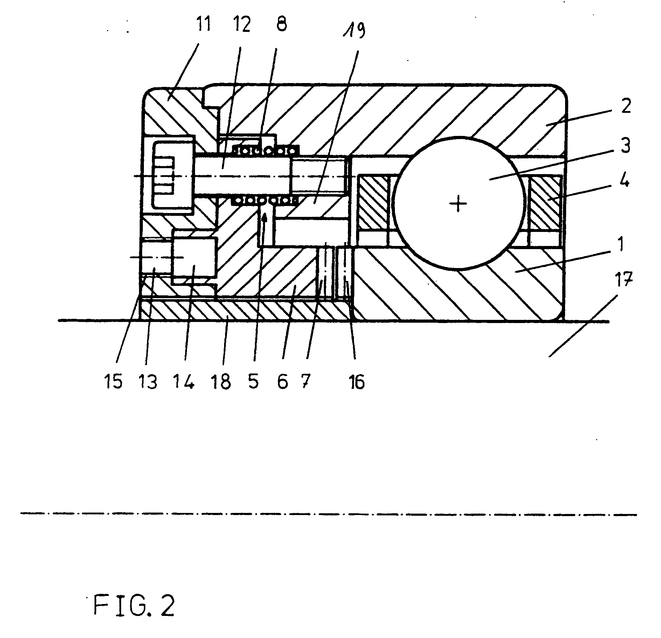

Figur 2 zeigt eine weitere Ausführungsform der erfindungsgemäßen Lagereinheit als Radialkugellager in Schnittdarstellung. Diese Ausführungsform entspricht in wesentlichen Zügen der in Figur 1 dargestellten Ausführungsform, insbesondere auch im Hinblick auf die Ausbildung der Verriegelungselemente als axial ineinandergreifende Verzahnungen 7 und 16. Im Unterschied zu Figur 1 sind bei der Ausführungsform gemäß Figur 2 jedoch keine Bolzen 9 vorhanden. Dies wird dadurch ermöglicht, dass am Außenring 2 ein radial nach innen weisender Flansch 19 ausgebildet ist, in den die Schrauben 12 eingeschraubt sind. Durch diese Modifikation können die Schrauben 12 die Funktionen der Bolzen 9 aus Figur 1 mit übernehmen, d. h. die Schrauben 12 nehmen nunmehr auch die Schraubenfedern 8 auf und dienen der axialen Führung des Kolbens 6 und der in Umfangsrichtung formschlüssigen Verbindung zwischen dem Kolben 6 und der Grundplatte 11. Bis auf die geschilderte Modifikation ist die in Figur 2 dargestellte Ausführungsform sowohl bezüglich ihres Aufbaus als auch bezüglich ihrer Funktionsweise identisch zur Ausführungsform gemäß Figur 1 und wird daher nicht nochmals gesondert in allen Einzelheiten beschrieben.

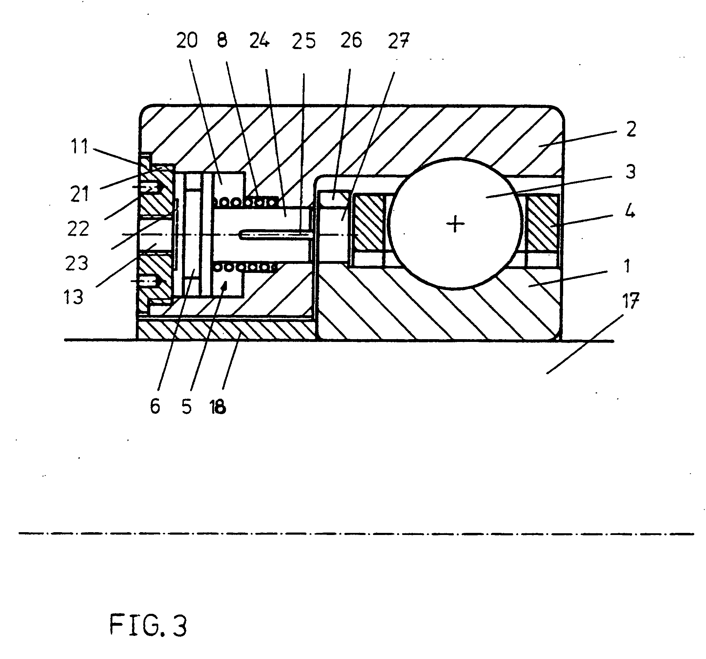

Figur 3 zeigt eine weitere Ausführungsform der erfindungsgemäßen Lagereinheit als Radialkugellager in Schnittdarstellung. Bei dieser Ausführungsform ist insbesondere der Verriegelungsmechanismus verglichen zu den Figuren 1 und 2 derart abgewandelt, dass keine ineinandergreifenden Verzahnungen zum Einsatz kommen, sondern ein oder mehrere in Bohrungen eingreifende Bolzen. Bei der in Figur 3 dargestellten Ausführungsform ist der Außenring 2 mit wenigstens einer in Axialrichtung verlaufenden, mehrfach gestuften Bohrung 20 versehen. Diese Bohrung 20 wird zur Lageraußenseite hin durch die als Deckel ausgebildete Grundplatte 11 verschlossen. Zu diesem Zweck weist die Grundplatte 11 ein Außengewinde 21 auf, durch das sie mit dem Außenring 2 verschraubt ist. Um die Grundplatte 11 festziehen und lösen zu können ist sie mit Sacklöchern 22 versehen, in die ein entsprechend geformtes Werkzeug eingreifen kann. Der Druckluftkanal 13 ist zentral in der Grundplatte 11 angeordnet und durchdringt diese in Axialrichtung. An der Lagerinnenseite liegt an der Grundplatte 11 der Kolben 6 an, der in der Bohrung 20 axial verschiebbar ist. An seiner der Grundplatte 11 zugewandten Stirnseite weist der Kolben 6 eine Vertiefung 23 auf und an seiner von der Grundplatte 11 abgewandten Seite ist der Kolben 6 als sich in Axialrichtung erstreckender Verriegelungsbolzen 24 ausgebildet bzw. der Verriegelungsbolzen 24 ist dort am Kolben 6 befestigt. Auf den Verriegelungsbolzen 24 ist die Schraubenfeder 8 aufgefädelt, die sich mit ihrem einen Ende am Kolben 6 und mit ihrem anderen Ende am Außenring 2 abstützt. Der Verriegelungsbolzen 24 weist wenigstens eine in Axialrichtung verlaufende Entlüftungsnut 25 auf, über die eine Entlüftung der Bohrung 20 erfolgt. In dem der Innenseite der Lagereinheit zugewandten Endbereich ist die Bohrung 20 soweit verengt, dass sie als Führung für den Verriegelungsbolzen 24 dient. Diesem Endbereich benachbart ist ein radial nach außen gerichteter Flansch 26 des Außenrings 1. Der Flansch 26 weist wenigstens eine axial verlaufende Verriegelungsbohrung 27 auf mit vorzugsweise dem gleichen Durchmesser wie die Bohrung 20 in ihrem verengten Endbereich oder aber mit einem größeren Durchmesser. Die Verriegelungsbohrung 27 dient in Zusammenwirkung mit dem Verriegelungsbolzen 24 der Verriegelung der Lagereinheit.

In Figur 3 ist die Lagereinheit in entriegeltem Zustand dargestellt, d. h. der Verriegelungsbolzen 24 greift nicht in die Verriegelungsbohrung 27 ein, so dass der Innenring 1 und der Außenring 2 frei gegeneinander verdrehbar sind. Die dargestellte Position des Verriegelungsbolzens 24 wird eingenommen, wenn über den Druckluftkanal 13 keine Druckluft zugeführt wird. In diesem Fall wird der Kolben 6 getrieben von der Rückstellkraft der Schraubenfeder 8 gegen die Grundplatte 11 gepresst, so dass sich der Verriegelungsbolzen 24 in seiner linken Endposition befindet. Wird nun dem Druckluftkanal 13 Druckluft zugeführt, so strömt diese in die Vertiefung 23 des Kolbens 6 und drückt den Kolben 6 unter Überwindung der Rückstellkraft der Schraubenfeder 8 in Axialrichtung von der Grundplatte 11 weg. Die in der Bohrung 20 vorhandene Luft kann über die Entlüftungsnut 25 entweichen, so dass sich kein Gegendruck aufbaut. Im Rahmen der geschilderten Bewegung des Kolbens 6 taucht der Verriegelungsbolzen 24 in die Verriegelungsbohrung 27 des Innenrings 1 ein, so dass über den Verriegelungsbolzen 24 eine Formschlussverbindung zwischen dem Innenring 1 und dem Außenring 2 hergestellt wird und die Lagereinheit verriegelt wird. Wird der Druck im Druckluftkanal 13 wieder abgesenkt, so bewegt sich der Kolben 6 getrieben von der Rückstellkraft der Schraubenfeder 8 wieder zur Grundplatte 11 hin und dabei wird der Verriegelungsbolzen 24 wieder aus der Verriegelungsbohrung 27 herausgeschoben und die Lagereinheit damit entriegelt.

Eine Besonderheit der Ausführungsform nach Figur 3 besteht darin, dass eine Verriegelung der Lagereinheit nicht unter jedem beliebigen Drehwinkel möglich ist, da es für das Eintauchen des Verriegelungsbolzen 24 in die Verriegelungsbohrung 27 erforderlich ist, dass sich der Verriegelungsbolzen 24 und die Verriegelungsbohrung 27 gegenüber stehen. Ist dies nicht der Fall, so wird der Verriegelungsbolzen 24 gegen die Seitenwand des Flansches 26 gedrückt. Durch die zwischen der Stirnseite des Verriegelungsbolzen 24 und der Seitenwand des Flansches 26 auftretende Reibung kommt es zwar auch zu einer Behinderung einer Drehbewegung, eine formschlüssige Verriegelung ist jedoch nicht gegeben. Die formschlüssige Verriegelung kann erst dann einsetzen, wenn der Innenring 1 und der Außenring 2 solange relativ gegeneinander verdreht werden, bis der Verriegelungsbolzen 24 und die Verriegelungsbohrung 27 miteinander zur Deckung kommen. In diesem Augenblick taucht der Verriegelungsbolzen 24 in die Verriegelungsbohrung 27 ein und verriegelt die Lagereinheit formschlüssig. Bis zur tatsächlichen formschlüssigen Verriegelung werden der Innenring 1 und der Außenring 2 somit noch um den Drehwinkel gegeneinander verdreht, den der Verriegelungsbolzen 24 zum Zeitpunkt der Aktivierung der Verriegelung mit der Verriegelungsbohrung 27 bildet. Der Maximalwert dieses Drehwinkels bis zur tatsächlichen Verriegelung hängt von Anzahl und Anordnung der Verriegelungsbolzen 24 und der Verriegelungsbohrungen 27 ab.

In einer Ausführungsform, bei der ein Verriegelungsbolzen 24 und eine im Durchmesser entsprechende Verriegelungsbohrung 27 vorgesehen sind, beträgt der maximale Drehwinkel etwas weniger als 360 Grad, d. h. bis zur tatsächlichen Verriegelung können der Innenring 1 und der Außenring 2 relativ zueinander maximal nahezu eine ganze Umdrehung zurücklegen. Wählt man mehrere über den Umfang gleich verteilte Verriegelungsbohrungen 27, so verringert sich der maximale Drehwinkel entsprechend. Falls bestimmte bevorzugte Haltepositionen erwünscht sind, ist es auch möglich, eine davon abhängige ungleichmäßige Verteilung der Verriegelungsbohrungen 27 vorzusehen. Des weiteren ist es auch möglich, mehrere Verriegelungsbolzen 24 vorzusehen, und zwar sowohl in Kombination mit einer Verriegelungsbohrung 27 als auch mit mehreren Verriegelungsbohrungen 27. Dadurch kann der maximale Drehwinkel verringert werden oder durch mehrere gleichzeitig in die Verriegelungsbohrungen 27 eintauchende Verriegelungsbolzen 24 das maximal verriegelbare Drehmoment erhöht werden.

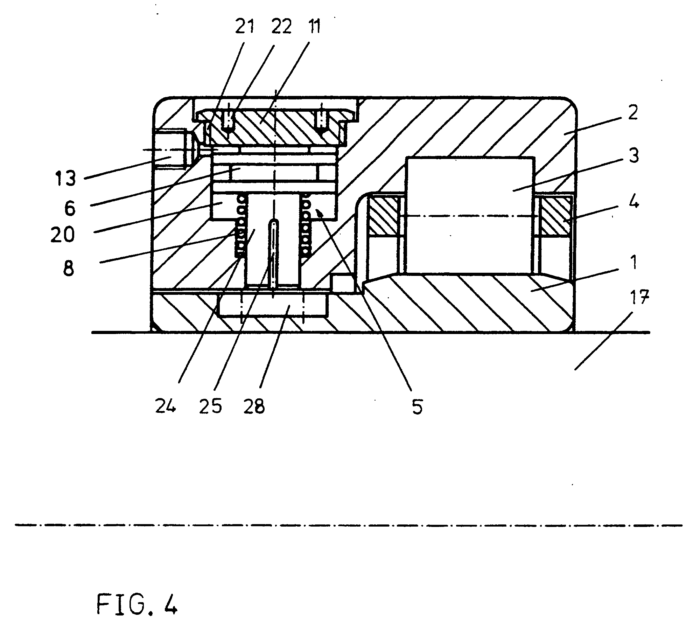

Figur 4 zeigt eine Ausführungsform der erfindungsgemäßen Lagereinheit als Radial-Zylinderrollenlager in Schnittdarstellung. Die Wahl von Zylinderrollen als Wälzkörper 3 und die bordlose Ausführung des Innenrings 1 bewirken bei dieser Ausführungsform eine gewisse axiale Verschiebbarkeit zwischen dem Innenring 1 und dem Außenring 2, die bei der Ausbildung der an der Verriegelung beteiligten Komponenten zu berücksichtigen ist. Im Gegensatz zu den Ausführungsformen gemäß den Figuren 1 und 3 werden bei der Ausführungsform der Figur 4 die Formschlusselemente nicht in axialer Richtung sondern in radialer Richtung verschoben. Um dies zu ermöglichen, ist der Außenring 2 mit einer radial verlaufenden Bohrung 20 versehen, die ähnlich wie die entsprechende Bohrung 20 aus Figur 3 gestuft ist. Die Bohrung 20 wird radial nach außen durch die Grundplatte 11 verschlossen, an deren Innenseite der Kolben 6 anliegt. Der Kolben 6 ist in der Bohrung 20 in Radialrichtung verschiebbar und ist ähnlich wie der Kolben 6 der Figur 3 aufgebaut, d. h. er verfügt über einen Verriegelungsbolzen 24. Im Unterschied zu Figur 3 ist der Verriegelungsbolzen 24 gemäß Figur 4 allerdings in Radialrichtung angeordnet und auf der Stirnfläche des Kolbens 6 ist statt der Vertiefung 23 eine Erhöhung angeordnet. Der Kolben 6 wird wiederum durch die Schraubenfeder 8 gegen die Grundplatte 11 vorgespannt. In dem Bereich, in dem die Bohrung 20 den Außenring 2 radial nach innen durchstößt, ist in dem benachbarten Abschnitt des Innenrings 1 wenigstens eine langlochartige Vertiefung 28 ausgebildet. Die in Axialrichtung langlochförmige Ausbildung der Vertiefung 28 ermöglicht eine einwandfreie Funktion des Verriegelungsmechanismusses trotz zugelassener axialer Verschiebung zwischen Innenring 1 und Außenring 2. Abweichend zu den Ausführungsformen der Figuren 1 bis 3 ist der Druckluftkanal 13 nicht in der Grundplatte 11 sondern direkt im Außenring 2 vorgesehen, um die äußere Mantelfläche des Außenrings 2 im Hinblick auf eine möglichst universelle Einsetzbarkeit der Lagereinheit von jeglichen Aufbauten freizuhalten. Um die in Figur 4 im entriegelten Zustand dargestellte Lagereinheit zu verriegeln, wird über den Druckluftkanal 13 Druckluft zugeführt, so dass sich der Kolben 6 und damit der Verriegelungsbolzen 27 unter Überwindung der Rückstellkraft der Schraubenfedern 8 radial nach innen verschieben, so dass der Verriegelungsbolzen 24 in die Vertiefung 28 des Innenrings eingreift und so mittels des Verriegelungsbolzens 24 eine formschlüssige Verbindung zwischen dem Innenring 1 und dem Außenring 2 hergestellt wird. Zur Entriegelung der Lagereinheit wird die Druckluft aus dem Druckluftkanal 13 abgelassen, so dass der Verriegelungsbolzen 24 unter Einwirkung der Rückstellkraft der Schraubenfeder 8 wieder aus der Vertiefung 28 herausgeschoben wird und damit die Formschlussverbindung aufgehoben wird.

Bezüglich der Anzahl und der Dimensionierung des bzw. der Verriegelungsbolzen 24 und der Vertiefung 28 bzw. der Vertiefungen 28 gilt das beim Ausführungsbeispiel der Figur 3 zum Verriegelungsbolzen 24 und der Verriegelungsbohrung 27 ausgeführte in analoger Weise.

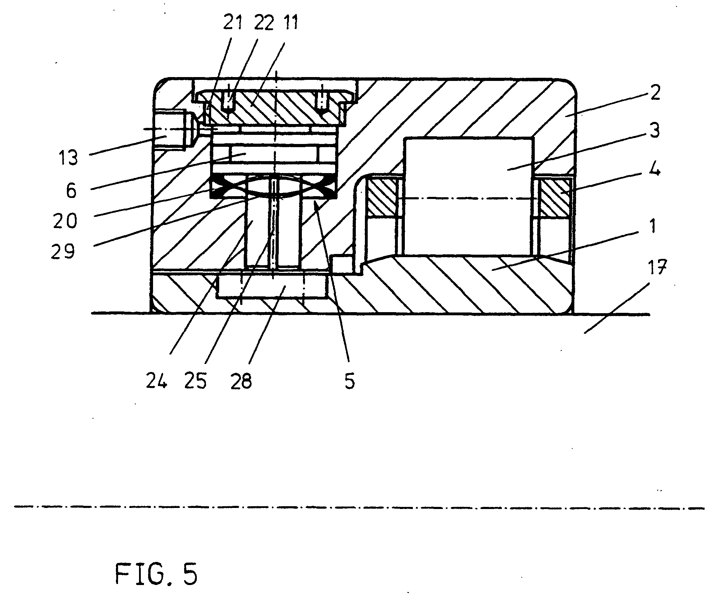

Figur 5 zeigt eine weitere Ausführungsform der erfindungsgemäßen Lagereinheit als Radial-Zylinderrollenlager in Schnittdarstellung. Diese Ausführungsform unterscheidet sich von der Ausführungsform der Figur 4 lediglich darin, dass statt der Schraubenfeder 8 eine Flachdraht-Druckfeder 29 verwendet wird. Die Flachdraht-Druckfeder 29 zeichnet sich durch eine in axialer Richtung sehr kompakte Bauweise aus, und ermöglicht daher einen besonders kompakten Aufbau der Verriegelungseinheit.

Abweichend von den in den Figuren 4 und 5 dargestellten Ausführungsformen kann der Verriegelungsmechanismus auch am Innenring 1 installiert sein und mit einer in den Außenring 2 eingelassenen Vertiefung 28 zusammenwirken.

Bei den vorstehend beschriebenen Ausführungsformen wurde die Verriegelungseinrichtung 5 jeweils mit Druckluft angesteuert. In gleicher Weise ist es jedoch auch möglich, wie bei der in Figur 1 dargestellten Ausführungsform bereits angedeutet, für die Ansteuerung eine unter Druck stehende Hydraulikflüssigkeit zu verwenden. Dies kann jeweils kleinere Modifikationen bei den verwendeten Komponenten erforderlich machen und das System muß gegebenenfalls entsprechend abgedichtet werden.

Des weiteren ist es auch möglich, die erfindungsgemäße Lagereinheit für eine mechanische Ansteuerung, beispielsweise mittels eines Seilzugs oder mittels eines Gestänges abzuwandeln.

Eine besonders interessante Variante stellt auch die Ansteuerung auf elektrischen oder magnetischen Wege dar. Für eine elektrische Ansteuerung kann die Lagereinheit mit einem oder mit mehreren Elektromagneten oder Elektromotoren ausgerüstet werden, die bei Zufuhr eines elektrischen Stromes mechanische Verriegelungselemente in eine Verriegelungs- bzw. eine Freigabeposition befördern. Eine magnetische Ansteuerung könnte mit Hilfe von Dauermagneten realisiert werden, die auf ein von einem äußeren Elektromagneten erzeugtes Feld reagieren und dadurch die Verriegelung aktivieren oder deaktivieren. Eine elektrische oder magnetische Ansteuerung bietet zum einen die Möglichkeit einer extrem schnellen Aktivierung bzw. Deaktivierung des Verriegelungsmechanismusses und kann zum anderen, falls gewünscht, berührungslos ausgeführt werden, d. h. es sind nicht notwendigerweise Zuleitungen mit der Lagereinheit zu verbinden.

Die Verriegelungseinrichtung 5 ist bei allen Ausführungsformen vorzugsweise an dem Lagerring angeordnet, der im Betrieb relativ zu der Steuereinrichtung, von der die Verriegelungseinrichtung angesteuert wird, nicht rotiert. Dadurch vereinfacht sich die Herstellung der Verbindung in Form von Druckluftschläuchen, Kabeln usw. zwischen der Steuereinrichtung und der Verriegelungseinrichtung 5.

Die Verriegelung der Lagereinheit erfolgt vorzugsweise im Stillstand, d. h. bei nicht gegeneinander rotierenden Innenring 1 und Außenring 2, da andernfalls der durch den formschlüssigen Eingriff hervorgerufenen abrupte Abbremsvorgang zu Beschädigungen an der Lagereinheit oder an den gelagerten Maschinenteilen führen kann.

Je nach Ausführungsform kann für die Aktivierung der Verriegelung auch eine langsame Drehbewegung zugelassen werden, d. h. eine Verriegelung ist unterhalb eines Schwellwerts für die Drehzahl möglich.

Informationen über den Rotationszustand der Lagereinheit liegen bei vielen Anwendungen ohnehin vor, beispielsweise die Betriebsparameter eines Antriebmotors, oder können mit Hilfe eines in die Lagereinheit optional integrierbaren Drehzahlsensors ermittelt werden.

Neben den beschriebenen Radialwälzlagern kann die erfindungsgemäße Lagereinheit auch als ein andersartig aufgebautes Radialwälzlager und ebenso auch als Axialwälzlager und als Gleitlager ausgebildet sein. Wesentlich dabei ist, dass zwischen einem ersten und einem zweiten Lagerring mittels eines Verriegelungselements eine formschlüssige Verbindung hergestellt wird, wobei keinerlei weitere nicht zur Lagereinheit gehörende Maschinenteile benötigt werden.

### Bezugszeichen

- 1: Innenring
- 2: Außenring
- 3: Wälzkörper
- 4: Käfig
- 5: Verriegelungseinrichtung
- 6: Kolben
- 7: Verzahnung (Kolben)
- 8: Schraubenfeder
- 9: Bolzen
- 10: Führungsbohrung
- 11: Grundplatte
- 12: Schraube
- 13: Druckluftkanal
- 14: Nut (Kolben)
- 15: Gewinde (Grundplatte)
- 16: Verzahnung (Innenring)
- 17: Welle
- 18: Distanzhülse
- 19: Flansch (Außenring)
- 20: Bohrung (Außenring)
- 21: Gewinde (Grundplatte)
- 22: Sackloch
- 23: Vertiefung (Kolben)
- 24: Verriegelungsbolzen
- 25: Entlüftungsnut
- 26: Flansch (Innenring)
- 27: Verriegelungsbohrung
- 28: Vertiefung (Innenring)
- 29: Flachdraht-Druckfeder

## Patentansprüche

1. Lagereinheit mit
- einem ersten Lagerring (1),
- einem zweiten Lagerring (2), der relativ zum ersten Lagerring (1) drehbar ist,
- einer Verriegelungseinrichtung (5), die in einem ersten Betriebszustand eine relative Drehbewegung zwischen dem ersten Lagerring (1) und dem zweiten Lagerring (2) zulässt,
**dadurch gekennzeichnet, dass**
- die Verriegelungseinrichtung (5) in einem zweiten Betriebszustand den ersten Lagerring (1) und den zweiten Lagerring (2) formschlüssig miteinander verbindet,
- die Verriegelungseinrichtung (5) in die Lagereinheit integriert ist und
- die Verriegelungseinrichtung (5) fernbedient zwischen dem ersten und dem zweiten Betriebszustand umschaltbar ist.

2. Lagereinheit nach Anspruch 1, **dadurch gekennzeichnet, dass** die Verriegelungseinrichtung (5) wenigstens ein bewegliches Formschlußelement (7, 24) für den formschlüssigen Eingriff in ein Gegenstück (16, 27,28) des ersten Lagerrings (1) oder des zweiten Lagerrings (2) aufweist und wenigstens ein Stellglied (6), mit dem das Formschlusselement (7, 24) zur Herstellung oder Aufhebung des formschlüssigen Eingriffs bewegbar ist.

3. Lagereinheit nach Anspruch 2, **dadurch gekennzeichnet, dass** die Verriegelungseinrichtung (5) wenigstens ein elastisches Element (8, 29) aufweist, welches mit dem Stellglied (6) derart zusammenwirkt, dass die Verriegelungseinrichtung (5) bei nicht angesteuertem Stellglied (6) einen Ruhezustand einnimmt, der wahlweise als der erste Betriebszustand oder als der zweite Betriebszustand der Verriegelungseinrichtung (5) vorgebbar ist.

4. Lagereinheit nach einem der Ansprüche 2 oder 3, **dadurch gekennzeichnet, dass** das Formschlusselement (7) und das Gegenstück (16) als Verzahnungen ausgebildet sind, die im zweiten Betriebszustand der Verriegelungseinrichtung (5) formschlüssig ineinander greifen.

5. Lagereinheit nach einem der Ansprüche 2 bis 3, **dadurch gekennzeichnet, dass** das Formschlusselement (24) als Bolzen ausgebildet ist und im zweiten Betriebszustand der Verriegelungseinrichtung (5) in eine als Bohrung oder Vertiefung ausgebildetes Gegenstück (27, 28) formschlüssig eingreift.

6. Lagereinheit nach einem der vorhergehenden Ansprüche, **dadurch gekennzeichnet, dass** die fernbediente Umschaltung zwischen den Betriebszuständen der Verriegelungseinrichtung (5) elektrisch, magnetisch, pneumatisch, hydraulisch oder mechanisch erfolgt.

7. Lagereinheit nach Anspruch 6, **dadurch gekennzeichnet, dass** die fernbediente Umschaltung zwischen den Betriebszuständen der Verriegelungseinrichtung (5) auf berührungslosen Weg erfolgt.

8. Lagereinheit nach einem der vorhergehenden Ansprüche, **dadurch gekennzeichnet, dass** der erste Lagerring (1) und/oder der zweite Lagerring (2) mit wenigstens einem angrenzenden Maschinenteil (17) formschlüssig verbunden sind.

9. Lagereinheit nach einem der vorhergehenden Ansprüche, **dadurch gekennzeichnet, dass** in die Lagereinheit ein Drehzahlsensor integriert ist.

10. Lagereinheit nach einem der vorhergehenden Ansprüche, **dadurch gekennzeichnet, dass** die Lagereinheit als Radiallager ausgebildet ist und Wälzkörper (3) oder Gleitflächen aufweist und die Verriegelungseinrichtung (5) den Wälzkörpern (3) oder Gleitflächen axial benachbart ist.

11. Verfahren zum Verriegeln einer Lagereinheit mit einem ersten Lagerring (1) und einem zweiten Lagerring (2), der relativ zum ersten Lagerring (1) drehbar ist,
**dadurch gekennzeichnet, dass**
zur Herstellung der Verriegelung der erste Lagerring (1) und der zweite Lagerring (2) mittels einer in die Lagereinheit integrierten Verriegelungseinrichtung (5) formschlüssig mit einander verbunden werden und zum Aufheben der Verriegelung die formschlüssige Verbindung wieder aufgehoben wird, wobei sowohl das Herstellen als auch das Aufheben der formschlüssigen Verbindung fernbedient erfolgen.

12. Verfahren nach Anspruch 11, **dadurch gekennzeichnet, dass** die Lagereinheit nur dann verriegelt wird, wenn der erste Lagerring (1) und der zweite Lagerring (2) mit einer unterhalb eines Schwellwerts liegenden Drehzahl gegeneinander rotieren.

13. Verfahren nach Anspruch 11, **dadurch gekennzeichnet, dass** die Lagereinheit nur dann verriegelt wird, wenn der erste Lagerring (1) und der zweite Lagerring (2) nicht gegeneinander rotieren.

## Claims

1. A bearing unit having
- a first bearing ring (1),
- a second bearing ring (2) which is rotatable relative to the first bearing ring (1),
- a locking device (5) which in a first operating condition allows relative rotational movement between the first bearing ring (1) and the second bearing ring (2),
**characterised in that**
- in a second operating condition the locking device (5) connects the first bearing ring (1) and the second bearing ring (2) to one another in a form-locking manner,
- the locking device (5) is integrated into the bearing unit and
- the locking device (5) can be switched by remote control between the first operating condition and the second operating condition.

2. A bearing unit according to Claim 1, **characterised in that** the locking device (5) has at least one form-locking element (7, 24) for form-locking engagement in a counter-part (16, 27, 28) of the first bearing ring (1) or the second bearing ring (2), and at least one control element (6) with which the form-locking element (7, 24) can be moved so as to bring about or remove the form-locking engagement.

3. A bearing unit according to Claim 2, **characterised in that** the locking device (5) has at least one elastic element (8, 29) which co-operates with the control element (6) in such a way that when the control element (6) is not actuated the locking device (5) assumes a rest condition which optionally can be preset as the first operating condition or as the second operating condition of the locking device (5).

4. A bearing unit according to either Claim 2 or Claim 3, **characterised in that** the forming-locking element (7) and the counterpart (16) are in the form of teeth which engage in one another in a form-locking manner in the second operating condition of the locking device (5).

5. A bearing unit according to any one of Claims 2 to 3, **characterised in that** the form-locking element (24) is in the form of a pin and in the second operating condition of the locking device (5) engages in a form-locking manner in a counterpart (27, 28) in the form of a bore or recess.

6. A bearing unit according to any one of the preceding Claims, **characterised in that** the remote-controlled switching-over between the operating conditions of the locking device (5) is effected electrically, magnetically, pneumatically, hydraulically or mechanically.

7. A bearing unit according to Claim 6, **characterised in that** the remote-controlled switching-over between the operating conditions of the locking device (5) is effected in contactless manner.

8. A bearing unit according to any one of the preceding Claims, **characterised in that** the first bearing unit (1) and/or the second bearing ring (2) are connected in a form-locking manner to at least one adjacent machine part (17).

9. A bearing unit according to any one of the preceding Claims, **characterised in that** a speed sensor is integrated into the bearing unit.

10. A bearing unit according to any one of the preceding Claims, **characterised in that** the bearing unit is in the form of a radial bearing and has rolling bodies (3) or sliding surfaces, and the locking device (5) is axially adjacent the rolling bodies (3) or sliding surfaces.

11. A method of locking a bearing unit, having a first bearing ring (1) and a second bearing ring (2) which can rotate relative to the first bearing ring (1), **characterised in that** to bring about the locking the first bearing ring (1) and the second bearing ring (2) are connected to one another in a form-locking manner, and to remove the locking the form-locking connection is removed again, both the bringing-about and the removal of the form-locking connection being effected by remote control.

12. A method according to Claim 11, **characterised in that** the bearing unit is only locked when the first bearing ring (1) and the second bearing ring (2) rotate with respect to one another at a speed of rotation below a threshold value.

13. A method according to Claim 11, **characterised in that** the bearing unit is only locked when the first bearing ring (1) and the second bearing ring (2) do not rotate with respect to one another.

## Revendications

1. Unité de palier comprenant
- une première bague de palier (1),
- une deuxième bague de palier (2) qui peut tourner par rapport à la première bague de palier (1),
- un dispositif de verrouillage (5) qui, dans un premier état de fonctionnement autorise un mouvement de rotation entre la première bague de palier (1) et la deuxième bague de palier (2),
**caractérisée par le fait que**
- le dispositif de verrouillage (5), dans un deuxième état de fonctionnement, relie l'une à l'autre par obstacle la première bague de palier (1) et la deuxième bague de palier (2),
- le dispositif de verrouillage (5) est intégré dans l'unité de palier,
- le dispositif de verrouillage (5) peut être commuté à distance entre le premier et le deuxième état de fonctionnement.

2. Unité de palier selon la revendication 1, **caractérisée par le fait que** le dispositif de verrouillage (5) comprend au moins un élément de blocage (7, 24) mobile destiné à venir en prise par complémentarité de formes avec un élément associé (16, 27, 28) de la première bague de palier (1) ou de la deuxième bague de palier (2) et au moins un orange de commande (6), à l'aide duquel l'élément de blocage (7, 24) peut être déplacé aux fins de réaliser ou d'annuler la liaison par obstacle.

3. Unité de palier selon la revendication 2, **caractérisée par le fait que** le dispositif de verrouillage (5) comprend au moins un élément élastique (8, 29) qui coopère avec l'orange de commande (6) d'une manière telle, que le dispositif de verrouillage (5), lorsque l'orange de commande (6) n'est pas sollicité, occupe une position de repos qui peut être définie au choix comme premier état de fonctionnement ou comme deuxième état de fonctionnement du dispositif de verrouillage (5).

4. Unité de palier selon la revendication 2 ou 3, **caractérisée par le fait que** l'élément de blocage (7) et l'élément associé (16) sont conformés en dentures, qui sont en prise l'une avec l'autre avec complémentarité de formes dans le deuxième état de fonctionnement du dispositif de verrouillage (5).

5. Unité de palier selon une des revendications 2 à 3, **caractérisée par le fait que** l'élément de blocage (24) est conformé en tige et, dans le deuxième état de fonctionnement du dispositif de verrouillage (5), s'engage avec complémentarité de formes dans l'élément associé (27, 28) conformé en trou ou en cavité.

6. Unité de palier selon une des revendications précédentes, **caractérisée par le fait que** la commutation à distance entre les états de fonctionnement du dispositif de verrouillage (5) a lieu par voie électrique, magnétique, pneumatique, hydraulique ou mécanique.

7. Unité de palier selon la revendication 6, **caractérisée par le fait que** la commutation à distance entre les états de fonctionnement du dispositif de verrouillage (5) a lieu par des moyens sans contact.

8. Unité de palier selon une des revendications précédentes, **caractérisée par le fait que** la première bague de palier (1) et/ou la deuxième bague de palier (2) est/sont liée(s) par obstacle à au moins un élément de machine (17) contigu.

9. Unité de palier selon une des revendications précédentes, **caractérisée par le fait qu'**un capteur de vitesse de rotation est intégré dans l'unité de palier.

10. Unité de palier selon une des revendications précédentes, **caractérisée par le fait que** l'unité de palier est conformée en palier radial et présente des corps roulants (3) ou des surfaces de glissement et que le dispositif de verrouillage (5) est voisin axialement des corps roulants (3) ou des surfaces de glissement.

11. Procédé de verrouillage d'une unité de palier comportant une première bague de palier (1) et une deuxième bague de palier (2) qui peut tourner par rapport à la première bague de palier (1), **caractérisé par** la fait que pour réaliser le verrouillage, la première bague de palier (1) et la deuxième bague de palier (2) sont liées l'une à l'autre par obstacle à l'aide d'un dispositif de verrouillage (5) intégré dans l'unité de palier et que pour annuler le verrouillage la liaison par obstacle est supprimée, aussi bien la réalisation que l'annulation de la liaison par obstacle étant commandée à distance.

12. Procédé selon la revendication 11, **caractérisé par le fait que** l'unité de palier n'est verrouillée que lorsque la première bague de palier (1) et la deuxième bague de palier (2) tournent l'une par rapport à l'autre à une vitesse inférieure à un seuil.

13. Procédé selon la revendication 11, **caractérisé par le fait que** l'unité de palier n'est verrouillée que lorsque la première bague de palier (1) et la deuxième bague de palier (2) ne tournent pas l'une par rapport à l'autre.
